(19) Europäisches Patentamt / European Patent Office / Office européen des brevets

(11) **EP 4 292 792 A1**

(12) **EUROPEAN PATENT APPLICATION**
published in accordance with Art. 153(4) EPC

(43) Date of publication:
**20.12.2023 Bulletin 2023/51**

(21) Application number: **22752528.4**

(22) Date of filing: **17.01.2022**

(51) International Patent Classification (IPC):
**B29C 41/14** *(2006.01)*    **B29C 41/36** *(2006.01)*
**B29K 9/00** *(2006.01)*    **B29L 22/00** *(2006.01)*
**C08F 6/00** *(2006.01)*    **C08F 8/00** *(2006.01)*
**C08J 5/02** *(2006.01)*

(52) Cooperative Patent Classification (CPC):
**B29C 41/14; B29C 41/36; C08F 6/00; C08F 8/00;
C08J 5/02;** B29K 2009/00; B29L 2022/00

(86) International application number:
**PCT/JP2022/001405**

(87) International publication number:
**WO 2022/172696 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.02.2021 JP 2021018992**

(71) Applicant: **Zeon Corporation
Tokyo 100-8246 (JP)**

(72) Inventor: **KODEMURA, Junji
Tokyo 100-8246 (JP)**

(74) Representative: **Gerauer, Marc Philippé
Kraus & Weisert
Patentanwälte PartGmbB
Thomas-Wimmer-Ring 15
80539 München (DE)**

(54) **METHOD FOR PRODUCING MOLDED BODY**

(57)    Provided is a method for producing a molded article comprising a washing step of washing a molded article with hot water at 40 to 100°C, the molded article being prepared from a latex composition containing a conjugated diene polymer latex and a xanthogen compound.

**Description**

TECHNICAL FIELD

The present invention relates to a method for producing a molded article prepared from a latex composition containing a conjugated diene polymer latex and a xanthogen compound, and more specifically relates to a method which can produce a molded article which can avoid delayed (Type IV) allergic reactions as well as that of immediate (Type I) allergic reactions, has a reduced odor, and has excellent color tone.

BACKGROUND ART

Conventionally, it is known that dip molded articles (such as teats, balloons, gloves, balloons, and stalls) used in contact with the human body can be prepared by dip molding a latex composition containing natural rubber latex. However, in some cases, such dip-molded articles are not suitable for use in direct contact with the mucosa or organs of a living body because the natural rubber latex contains proteins that may cause immediate (Type I) allergic reactions in the human body. In response to this problem, use of synthetic rubber latex instead of the natural rubber latex has been examined.

For example, Patent Document 1 discloses a composition for dip molding which is a latex composition containing zinc oxide, sulfur, and a vulcanization accelerator mixed with a latex of synthetic polyisoprene as a synthetic rubber. However, while the technique of Patent Document 1 can prevent occurrence of immediate (Type I) allergic reactions caused by proteins derived from natural rubber, in some cases, molded articles prepared from the latex composition, such as dip-molded articles, may cause delayed (Type IV) allergic reactions due to the vulcanization accelerator contained in the molded articles, such as dip-molded articles, when they are in contact with the human body.

To this, for example, Patent Document 2 discloses a latex composition containing a xanthogen compound mixed with a latex of carboxy-modified conjugated diene polymer. While the technique disclosed in Patent Document 2 allows preparation of a molded article which can avoid delayed (Type IV) allergic reactions as well as that of immediate (Type I) allergic reactions, the molded article has a relatively strong odor, leading to a demand for odor reduction.

RELATED ART DOCUMENTS

PATENT DOCUMENTS

Patent Document 1: WO 2014/129547
Patent Document 2: WO 2018/155243

SUMMARY OF THE INVENTION

PROBLEM TO BE SOLVED BY THE INVENTION

The present invention has been made in consideration of such circumstances. An object of the present invention is to provide a method for producing a molded article which can produce a molded article which can avoid delayed (Type IV) allergic reactions as well as that of immediate (Type I) allergic reactions, has a reduced odor, and has excellent color tone.

MEANS FOR SOLVING PROBLEMS

The present inventor, who has conducted extensive research to solve the above problems, has found that the problems can be solved by washing a molded article with hot water at 40 to 100°C, the molded article being prepared from a latex composition containing a conjugated diene polymer latex and a xanthogen compound. This knowledge has led to completion of the present invention.

Specifically, the present invention provides a method for producing a molded article, the method comprising a washing step of washing a molded article with hot water at 40 to 100°C, the molded article being prepared from a latex composition containing a conjugated diene polymer latex and a xanthogen compound.

Preferably, the method for producing a molded article according to the present invention further comprises a vulcanization step of vulcanizing the molded article prepared from the latex composition by heating the molded article at 80 to 150°C, wherein the washing step is a step of washing the molded article subjected to the vulcanization step with the hot water.

In the method for producing a molded article according to the present invention, preferably, the washing using the hot water is performed for a duration of 1 to 120 minutes.

In the method for producing a molded article according to the present invention, preferably, the washing with the hot water is performed by swirling the molded article in a tumbler type washing tank while the molded article is immersed in hot water.

In the method for producing a molded article according to the present invention, preferably, the conjugated diene polymer latex is a synthetic polyisoprene latex, a styrene-isoprene-styrene block copolymer latex, or a deproteinized natural rubber latex.

In the method for producing a molded article according to the present invention, preferably, the washing step comprises adding a metal salt to the hot water before washing the molded article, and the metal salt is added to the hot water in an amount of 0.1 to 10 parts by weight relative to 100 parts by weight of the molded article.

The present invention also provides a molded article prepared by cross-linking a conjugated diene polymer using a xanthogen compound, wherein the molded article contains 3 ppm by weight or less of carbon disulfide.

EFFECTS OF INVENTION

The present invention can produce a molded article which can avoid delayed (Type IV) allergic reactions as well as that of immediate (Type I) allergic reactions, has a reduced odor, and has excellent color tone.

DESCRIPTION OF EMBODIMENTS

The method for producing a molded article according to the present invention comprises a step of washing a molded article with hot water at 40 to 100°C, the molded article being prepared with a latex composition containing a conjugated diene polymer latex and a xanthogen compound.

<Latex composition>

First, the latex composition used in the production method according to the present invention will be described.

The latex composition used in the production method according to the present invention comprises a conjugated diene polymer latex and a xanthogen compound.

Examples of the conjugated diene polymer latex used in the present invention include, but should not be limited to, synthetic polyisoprene latices, styrene-isoprene-styrene block copolymer (SIS) latices, deproteinized natural rubber (protein-free natural rubber) latices, nitrile group-containing conjugated diene copolymer latices, and the like. Among these, preferred are latices of polymers having isoprene units, such as synthetic polyisoprene latices, SIS latices, and deproteinized natural rubber latices, and particularly preferred are synthetic polyisoprene latices.

In the case where a synthetic polyisoprene latex is used as the conjugated diene polymer latex, the synthetic polyisoprene contained in the synthetic polyisoprene latex may be an isoprene homopolymer, or may be a copolymer of isoprene and a different ethylenically unsaturated monomer copolymerizable therewith. The content of isoprene units in the synthetic polyisoprene is preferably 70 wt% or more, more preferably 90 wt% or more, still more preferably 95 wt% or more, particularly preferably 100 wt% (homopolymer of isoprene) relative to the total monomer units for easy of obtaining a molded article, such as a dip-molded article, which is flexible and has enhanced tensile strength.

Examples of different ethylenically unsaturated monomers copolymerizable with isoprene include conjugated diene monomers other than isoprene, such as butadiene, chloroprene, and 1,3-pentadiene; ethylenically unsaturated nitrile monomers such as acrylonitrile, methacrylonitrile, fumaronitrile, and $\alpha$-chloroacrylonitrile; vinyl aromatic monomers such as styrene and alkyl styrenes; ethylenically unsaturated carboxylic acid ester monomers such as methyl (meth)acrylate (which means "methyl acrylate and/or methyl methacrylate", and hereinafter, the same applies to ethyl (meth)acrylate, and the like), ethyl (meth)acrylate, butyl (meth)acrylate, and 2-ethylhexyl (meth)acrylate; and the like. These different ethylenically unsaturated monomers copolymerizable with isoprene may be used alone or in combination.

The synthetic polyisoprene can be prepared by a conventionally known method, for example, solution polymerization of isoprene optionally with a different ethylenically unsaturated monomer copolymerizable therewith in an inert polymerization solvent using a Ziegler polymerization catalyst composed of trialkyl aluminum-titanium tetrachloride or an alkyl lithium polymerization catalyst such as n-butyllithium or sec-butyllithium. Although the polymer solution of synthetic polyisoprene obtained through solution polymerization may be used as it is to produce the synthetic polyisoprene latex, solid synthetic polyisoprene can be extracted from the polymer solution, and can be dissolved in an organic solvent to prepare a solution, which is then used to produce the synthetic polyisoprene latex.

In the case where the polymer solution of synthetic polyisoprene is prepared by the above-mentioned method, impurities including residual polymerization catalyst in the polymer solution may be removed. Furthermore, an antioxidant described later may be added to the solution during or after polymerization. Alternatively, commercially available solid synthetic polyisoprene can also be used.

There are four isoprene units in the synthetic polyisoprene which differ in bonding geometry of isoprene units: cis bond units, trans bond units, 1,2-vinyl bond units, and 3,4-vinyl bond units. To obtain a molded article, such as a dip-molded article, having enhanced tensile strength, the content of cis bond units among isoprene units contained in the synthetic polyisoprene is preferably 70 wt% or more, more preferably 90 wt% or more, still more preferably 95 wt% or more relative to the total isoprene units.

The synthetic polyisoprene has a weight average molecular weight of preferably 10,000 to 5,000,000, more preferably 500,000 to 5,000,000, still more preferably 800,000 to 3,000,000 as calibrated against polystyrene standards by gel permeation chromatography. Adjusting the weight average molecular weight of the synthetic polyisoprene within the above ranges tends to result in a molded article, such as a dip-molded article, having further enhanced tensile strength and tensile elongation is obtained and facilitate the production of the synthetic polyisoprene latex.

The synthetic polyisoprene has a polymer Mooney viscosity ($ML_{1+4}$, 100°C) of preferably 50 to 80, more preferably 60 to 80, still more preferably 70 to 80.

Examples of methods for providing the synthetic polyisoprene latex include (1) a method for producing a synthetic polyisoprene latex by emulsifying a solution or microsuspension of the synthetic polyisoprene, which is dissolved or finely dispersed in an organic solvent, in water in the presence of an emulsifier, followed by removal of the organic solvent if required, and (2) a method for directly producing a synthetic polyisoprene latex by emulsion polymerization or suspension polymerization of isoprene alone or a mixture of isoprene and an ethylenically unsaturated monomer copolymerizable therewith in the presence of an emulsifier. Preferred is the production method (1) because this method allows the use of a synthetic polyisoprene in which cis bond units occupy in a high proportion of the total isoprene units, and tends to result in a molded article, such as a dip-molded article, having high mechanical properties such as tensile strength.

Examples of organic solvents used in the production method (1) include aromatic hydrocarbon solvents such as benzene, toluene, and xylene; alicyclic hydrocarbon solvents such as cyclopentane, cyclopentene, cyclohexane, and cyclohexene; aliphatic hydrocarbon solvents such as pentane, hexane, and heptane; halogenated hydrocarbon solvents such as methylene chloride, chloroform, and ethylene dichloride; and the like. Among these, preferred are alicyclic hydrocarbon solvents and aliphatic hydrocarbon solvents, more preferred are pentane, cyclohexane, and n-hexane, and particularly preferred is n-hexane.

The amount of the organic solvent used is preferably 2,000 parts by weight or less, more preferably 20 to 1,500 parts by weight, still more preferably 500 to 1,500 parts by weight relative to 100 parts by weight of the synthetic polyisoprene.

Preferred emulsifiers for used in the production method (1) are ionic emulsifiers. Among these, more preferred is use of anionic emulsifiers. Examples of anionic emulsifiers include fatty acid salts such as sodium laurate, potassium myristate, sodium palmitate, potassium oleate, sodium linolenate, sodium rosinate, and potassium rosinate; alkylbenzene sulfonates such as sodium dodecylbenzenesulfonate, potassium dodecylbenzenesulfonate, sodium decylbenzenesulfonate, potassium decylbenzenesulfonate, sodium cetylbenzenesulfonate, and potassium cetylbenzenesulfonate; alkyl sulfosuccinates such as sodium di(2-ethylhexyl) sulfosuccinate, potassium di(2-ethylhexyl) sulfosuccinate, and sodium dioctylsulfosuccinate; alkyl sulfate ester salts such as sodium lauryl sulfate and potassium lauryl sulfate; polyoxyethylene alkyl ether sulfate ester salts such as sodium polyoxyethylene lauryl ether sulfate and potassium polyoxyethylene lauryl ether sulfate; monoalkyl phosphate salts such as sodium lauryl phosphate and potassium lauryl phosphate; and the like.

Among these anionic emulsifiers, preferred are fatty acid salts, alkylbenzene sulfonates, alkyl sulfosuccinates, alkyl sulfate ester salts, and polyoxyethylene alkyl ether sulfate ester salts, and particularly preferred are fatty acid salts and alkylbenzene sulfonates.

A combination of at least one selected from the group consisting of alkylbenzene sulfonates, alkyl sulfosuccinates, alkyl sulfate ester salts, and polyoxyethylene alkyl ether sulfate ester salts with a fatty acid salt may also be used to more efficiently remove a trace of residual polymerization catalyst (particularly, aluminum and titanium) derived from the synthetic polyisoprene and suppress the occurrence of aggregates during production of the latex composition. In this case, preferred is use of an alkylbenzene sulfonate in combination with a fatty acid salt. Here, preferred fatty acid salts are sodium rosinate and potassium rosinate, and preferred alkylbenzene sulfonates are sodium dodecylbenzenesulfonate and potassium dodecylbenzenesulfonate. These emulsifiers may be used alone or in combination.

As described above, use of a combination of at least one selected from the group consisting of alkylbenzene sulfonates, alkyl sulfosuccinates, alkyl sulfate ester salts, and polyoxyethylene alkyl ether sulfate ester salts with a fatty acid salt provides a latex containing the at least one selected from the group consisting of alkylbenzene sulfonates, alkyl sulfosuccinates, alkyl sulfate ester salts, and polyoxyethylene alkyl ether sulfate ester salts and the fatty acid salt.

Examples of ionic emulsifiers other than anionic emulsifiers include copolymerizable emulsifiers such as sulfo esters of $\alpha,\beta$-unsaturated carboxylic acids, sulfate esters of $\alpha,\beta$-unsaturated carboxylic acids, and sulfoalkylaryl ethers.

Further, any of nonionic emulsifiers such as polyoxyethylene alkyl ethers, polyoxyethylene alkyl phenol ethers, polyoxyethylene alkyl esters, and polyoxyethylene sorbitan alkyl esters may be used in combination as long as they do not inhibit coagulation by the action of a coagulant used in molding such as dip molding.

The amount of the emulsifier used in the production method (1) is preferably 0.1 to 50 parts by weight, more preferably 0.5 to 30 parts by weight, still more preferably 1 to 20 parts by weight relative to 100 parts by weight of the synthetic polyisoprene. When two or more emulsifiers are used, the total amount of these emulsifiers used preferably falls within these ranges above. In other words, for example, when a combination of at least one selected from the group consisting of alkylbenzene sulfonates, alkyl sulfosuccinates, alkyl sulfate ester salts, and polyoxyethylene alkyl ether sulfate ester salts with a fatty acid salt is used, the total amount of these emulsifiers used preferably falls within the above ranges. By using emulsifier(s) in an amount within the above ranges, the occurrence of aggregates during emulsion can be further suppressed.

When a combination of at least one selected from the group consisting of alkylbenzene sulfonates, alkyl sulfosuccinates, alkyl sulfate ester salts, and polyoxyethylene alkyl ether sulfate ester salts with a fatty acid salt is used as an anionic emulsifier, the ratio "fatty acid salt":"total of at least one emulsifier selected from the group consisting of alkylbenzene sulfonates, alkyl sulfosuccinates, alkyl sulfate ester salts, and polyoxyethylene alkyl ether sulfate ester salts" on a weight basis is in the range of preferably 1:1 to 10:1, more preferably 1:1 to 7:1. The use of at least one emulsifier selected from the group consisting of alkylbenzene sulfonates, alkyl sulfosuccinates, alkyl sulfate ester salts, and polyoxyethylene alkyl ether sulfate ester salts at a ratio controlled within the ranges above can suppress foaming of the synthetic polyisoprene during handling thereof. This eliminates the need of processes such as long-term standing and addition of a defoamer, leading to improved work efficiency and reduced costs.

The amount of water used in the production method (1) is preferably 10 to 1,000 parts by weight, more preferably 30 to 500 parts by weight, most preferably 50 to 100 parts by weight relative to 100 parts by weight of the organic solvent solution of the synthetic polyisoprene. Examples of the type of water used include hard water, soft water, deionized water, distilled water, zeolite water, and the like. Preferred are soft water, deionized water, and distilled water.

To emulsify the solution or microsuspension of the synthetic polyisoprene dissolved or finely dispersed in the organic solvent in the presence of the emulsifier, any apparatus commercially available as an emulsifying apparatus or a dispersing machine can be used without limitation. The emulsifier can be added to the solution or microsuspension of the synthetic polyisoprene in any manner without limitation. The emulsifier may be added in advance to one or both of water and the solution or microsuspension of the synthetic polyisoprene, or may be added all at once or in portions to the liquid to be emulsified during the emulsification process.

Examples of emulsifying apparatuses include batch emulsifying apparatuses such as a trade name "Homogenizer" (available from IKA Works GmbH & Co. KG), a trade name "POLYTRON" (available from Kinematica AG), and a trade name "TK AUTO-HCMO MIXER" (available from Tokushu Kika Kogyo Co., Ltd.); continuous emulsifying apparatuses such as a trade name "TK PIPELINE-HCMO MIXER" (available from Tokushu Kika Kogyo Co., Ltd.), a trade name "Colloid mill" (available from Shinko Pantec Co., Ltd.), a trade name "SLASHER" (available from NIPPON COKE & ENGINEERING CO., LTD.), a trade name "Trigonal wet grinder" (available from Mitsui Miike Kakoki K.K.), a trade name "CAVITRON" (available from Eurotec, Ltd.), a trade name "MILDER" (available from Pacific Machinery & Engineering Co., Ltd.), and a trade name "Fine Flow Mill" (available from Pacific Machinery & Engineering Co., Ltd.); high pressure emulsifying apparatuses such as a trade name "Microfluidizer" (available from MIZUHO INDUSTRIAL CO., LTD.), a trade name "NANCMIZER" (available from Nanomizer Inc.), and a trade name "APV GAULIN" (available from Manton-Gaulin Company); membrane emulsifying apparatuses such as a trade name "Membrane emulsifying apparatus" (available from REICA Co., Ltd.); vibratory emulsifying apparatuses such as a trade name "VIBROMIXER" (available from REICA Co., Ltd.); ultrasonic emulsifying apparatuses such as a trade name "Ultrasonic homogenizer" (available from Branson Ultrasonics Corporation); and the like. The conditions for the emulsification process using such an emulsifying apparatus are not particularly limited, and the treatment temperature, the treatment time, and the like may be appropriately selected to ensure a desired dispersion state.

In the production method (1), the organic solvent is desirably removed from the emulsion prepared through the emulsification process.

Preferred methods for removing the organic solvent from the emulsion are methods with which the amount of the organic solvent (preferably an alicyclic hydrocarbon solvent or an aliphatic hydrocarbon solvent) in the resulting synthetic polyisoprene latex can be reduced to 500 ppm by weight or less. For example, methods such as vacuum distillation, normal pressure distillation, water vapor distillation, and centrifugation can be used.

The organic solvent can be removed while a defoamer is being added. The addition of the defoamer can suppress foaming of the synthetic polyisoprene.

Further, to increase the solids content of the synthetic polyisoprene latex, a concentration process by vacuum distillation, normal pressure distillation, centrifugation, membrane concentration, or the like may be performed as needed after the removal of the organic solvent. In particular, centrifugation is preferably performed because it can increase the solids content of the synthetic polyisoprene latex and reduce the amount of residual emulsifier in the synthetic polyisoprene latex.

The centrifugation is preferably performed, for example, using a continuous centrifuge under the conditions in which the centrifugal force is preferably 100 to 10,000 G, the solids content of the synthetic polyisoprene latex before centrifugation is preferably 2 to 15 wt%, the feed flow rate into the centrifuge is preferably 500 to 1700 Kg/hr, and the back pressure (gauge pressure) of the centrifuge is preferably 0.03 to 1.6 MPa. Thus, the synthetic polyisoprene latex can be obtained as a light solution after centrifugation. This process can reduce the amount of residual emulsifier in the synthetic polyisoprene latex.

The solids content of the synthetic polyisoprene latex is preferably 30 to 70 wt%, more preferably 40 to 70 wt%, still more preferably 50 to 70 wt%. When the solids content is not less than the lower limit of the above ranges, a tear resistant molded article such as a dip-molded article can be produced. When the solids content is not more than the upper limit of the above ranges, the viscosity of the synthetic polyisoprene latex will not increase too high, which facilitates transfer of the synthetic polyisoprene latex through a pipe and stirring of the synthetic polyisoprene latex in a preparation tank.

The volume average particle size of the synthetic polyisoprene latex is preferably 0.1 to 10 $\mu$m, more preferably 0.5 to 3 $\mu$m, still more preferably 0.5 to 2.0 $\mu$m. Adjusting the volume average particle size within the above ranges leads to appropriate viscosity of the latex to ensure ease of handling, and can suppress formation of a film on the surface of the latex during storage of the synthetic polyisoprene latex.

Further, the synthetic polyisoprene latex may contain additives typically used in the field of latex, such as a pH adjuster, a defoamer, a preservative, a cross-linking agent, a chelating agent, an oxygen scavenger, a dispersant, and an antioxidant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Preferred are alkali metal hydroxides and ammonia.

As described above, the conjugated diene polymer latex can be a styrene-isoprene-styrene block copolymer (SIS) latex. In the term "SIS", "S" represents a styrene block, and "I" represents an isoprene block.

The SIS in the SIS latex can be prepared by a conventionally known method such as block copolymerization of isoprene and styrene in an inert polymerization solvent using an active organic metal such as n-butyllithium as an initiator. Although the resulting polymer solution of SIS may be used as it is to produce an SIS latex, solid SIS can be extracted from the polymer solution and be dissolved in an organic solvent to prepare a solution, which is then used to produce an SIS latex. Any method for producing the SIS latex can be used without limitation. Preferred is a method for producing the SIS latex by emulsifying a solution or microsuspension of SIS, which is dissolved or finely dispersed in an organic solvent, in water in the presence of an emulsifier and removing the organic solvent as needed.

In this case, impurities including residual polymerization catalyst in the polymer solution after synthesis may be removed. During or after polymerization, an antioxidant (described later) may be added to the solution. Alternatively, commercially available solid SIS can be used.

Examples of usable organic solvents include the same organic solvents as those listed for the synthetic polyisoprene. Preferred are aromatic hydrocarbon solvents and alicyclic hydrocarbon solvents, and particularly preferred are cyclohexane and toluene.

The amount of the organic solvent used is usually 50 to 2,000 parts by weight, preferably 80 to 1,000 parts by weight, more preferably 100 to 500 parts by weight, still more preferably 150 to 300 parts by weight relative to 100 parts by weight of the SIS.

Examples of emulsifiers include the same emulsifiers as those listed for the synthetic polyisoprene. Suitable are anionic emulsifiers, and particularly preferred are potassium rosinate and sodium dodecylbenzenesulfonate.

The amount of the emulsifier used is preferably 0.1 to 50 parts by weight, more preferably 0.5 to 30 parts by weight relative to 100 parts by weight of the SIS. The use of the emulsifier within the above ranges can result in a latex having enhanced stability.

The amount of water used in the aforementioned method for producing the SIS latex is preferably 10 to 1,000 parts by weight, more preferably 30 to 500 parts by weight, most preferably 50 to 100 parts by weight relative to 100 parts by weight of the organic solvent solution of the SIS. Examples of the type of water used include hard water, soft water, deionized water, distilled water, zeolite water, and the like. Further, any of polar solvents typified by alcohols such as methanol may be used in combination with water.

Examples of apparatuses for emulsifying an organic solvent solution or microsuspension of the SIS in water in the presence of an emulsifier include the same as those listed for the synthetic polyisoprene. The emulsifier can be added in any manner without limitation. The emulsifier may be added in advance to one or both of water and the organic solvent solution or microsuspension of the SIS, or may be added all at one or in portions to the liquid to be emulsified during the emulsification process.

In the aforementioned method for producing the SIS latex, the SIS latex is preferably obtained by removing the organic solvent from the emulsion prepared through the emulsification process. The organic solvent can be removed from the emulsion by any method without limitation, and methods such as vacuum distillation, normal pressure distillation, water vapor distillation, and centrifugation can be used.

Further, to increase the solids content of the SIS latex, a concentration process by vacuum distillation, normal pressure distillation, centrifugation, membrane concentration, or the like may be performed as needed after the removal of the organic solvent.

The organic solvent can be removed while a defoamer is being added. The addition of the defoamer can prevent foaming.

The solids content of the SIS latex is preferably 30 to 70 wt%, more preferably 40 to 70 wt%, still more preferably 50 to 70 wt%. When the solids content is not less than the lower limit of the above ranges, a tear resistant molded article such as a dip-molded article is obtained. When the solids content is not more than the upper limit of the above ranges, the viscosity of the SIS latex will not increase too high, which facilitates transfer of the SIS latex through a pipe or stirring of the SIS latex in a preparation tank.

Further, the SIS latex may contain additives generally used in the field of latex, such as a pH adjuster, a defoamer, a preservative, a cross-linking agent, a chelating agent, an oxygen scavenger, a dispersant, and an antioxidant. Examples of pH adjusters include the same as those listed for the synthetic polyisoprene. Preferred are alkali metal hydroxides and ammonia. Although the pH of the SIS latex in this case is not particularly limited, it is preferred, as described later, that the pH of the latex composition prepared using materials including the SIS latex be controlled to 10 or more before aging of the latex composition under predetermined conditions.

The content of styrene units in styrene blocks of the SIS contained in the SIS latex thus obtained is preferably 70 to 100 wt%, more preferably 90 to 100 wt%, still more preferably 100 wt% relative to the total monomer units.

The content of isoprene units in isoprene blocks in the SIS is preferably 70 to 100 wt%, more preferably 90 to 100 wt%, still more preferably 100 wt% relative to the total monomer units.

The content ratio of styrene units to isoprene units in the SIS is in the range of usually 1:99 to 90:10, preferably 3:97 to 70:30, more preferably 5:95 to 50:50, still more preferably 10:90 to 30:70 as a weight ratio of "styrene units:isoprene units".

The weight average molecular weight of the SIS is preferably 10,000 to 1,000,000, more preferably 50,000 to 500,000, still more preferably 100,000 to 300,000 calibrated against polystyrene standards by gel permeation chromatography. Adjusting the weight average molecular weight of the SIS within the above ranges tends to result in a molded article, such as a dip-molded article, having improved balance between tensile strength and flexibility, and facilitate the production of the SIS latex.

The volume average particle size of latex particles (SIS particles) in the SIS latex is preferably 0.1 to 10 $\mu$m, more preferably 0.5 to 3 $\mu$m, still more preferably 0.5 to 2.0 $\mu$m. Adjusting the volume average particle size of the latex particles within the above ranges leads to appropriate viscosity of the latex to ensure ease of handling, and can suppress formation of a film on the surface of the latex during storage of the SIS latex.

As described above, a latex of a nitrile group-containing conjugated diene copolymer can also be used as the conjugated diene polymer latex.

The nitrile group-containing conjugated diene copolymer is a copolymer prepared by copolymerization of an ethylenically unsaturated nitrile monomer with a conjugated diene monomer, and may be any of copolymers formed by copolymerization of these monomers with a different ethylenically unsaturated monomer that is copolymerizable with these monomers and is used as needed in addition to these monomers.

Examples of conjugated diene monomers include 1,3-butadiene, isoprene, 2,3-dimethyl-1,3-butadiene, 2-ethyl-1,3-butadiene, 1,3-pentadiene, chloroprene, and the like. Among these, preferred are 1,3-butadiene and isoprene, and more preferred is 1,3-butadiene. These conjugated diene monomers can be used alone or in combination. The content of conjugated diene monomer units formed from such conjugated diene monomers in the nitrile group-containing conjugated diene copolymer is preferably 56 to 78 wt%, more preferably 56 to 73 wt%, still more preferably 56 to 68 wt%. By adjusting the content of conjugated diene monomer units within the above ranges, a molded article, such as a dip-molded article, having sufficient tensile strength and having a further improved texture and further improved elongation can be produced.

Such ethylenically unsaturated nitrile monomers may be any ethylenically unsaturated monomers containing a nitrile group without limitation. Examples thereof include acrylonitrile, methacrylonitrile, fumaronitrile, $\alpha$-chloroacrylonitrile, $\alpha$-cyanoethylacrylonitrile, and the like. Among these, preferred are acrylonitrile and methacrylonitrile, and more preferred is acrylonitrile. These ethylenically unsaturated nitrile monomers can be used alone or in combination. The content of ethylenically unsaturated nitrile monomer units formed from such ethylenically unsaturated nitrile monomer(s) in the nitrile group-containing conjugated diene copolymer is preferably 20 to 40 wt%, more preferably 25 to 40 wt%, still more preferably 30 to 40 wt%. By adjusting the content of ethylenically unsaturated nitrile monomer units within the above ranges, a molded article, such as a dip-molded article, having sufficient tensile strength and having a further improved texture and further improved elongation can be produced.

Examples of different ethylenically unsaturated monomers that are copolymerizable with the conjugated diene monomer and the ethylenically unsaturated nitrile monomer include ethylenically unsaturated carboxylic acid monomers that are ethylenically unsaturated monomers containing a carboxyl group; vinyl aromatic monomers such as styrene, alkyl styrenes, and vinylnaphthalene; fluoroalkyl vinyl ethers such as fluoroethyl vinyl ether; ethylenically unsaturated amide monomers such as (meth)acrylamide, N-methylol (meth)acrylamide, N,N-dimethylol (meth)acrylamide, N-methoxymethyl (meth)acrylamide, and N-propoxymethyl (meth)acrylamide; ethylenically unsaturated carboxylic acid ester monomers such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, dibutyl maleate, dibutyl fumarate, diethyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, and dimethylaminoethyl (meth)acrylate; cross-linkable monomers such as divinylbenzene, polyethylene glycol di(meth)acrylate, polypropylene glycol di(meth)acrylate, trimethylolpropane tri(meth)acrylate, and pentaerythritol (meth)acrylate; and the like. These ethylenically unsaturated monomers can be used alone or in combination.

Any ethylenically unsaturated carboxylic acid monomer can be selected without limitation as long as it is an ethylenically unsaturated monomer containing a carboxyl group. Examples thereof include ethylenically unsaturated monocarboxylic acid monomers such as acrylic acid and methacrylic acid; ethylenically unsaturated polyvalent carboxylic acid monomers such as itaconic acid, maleic acid, and fumaric acid; ethylenically unsaturated polyvalent carboxylic anhydrides such as maleic anhydride and citraconic anhydride; ethylenically unsaturated polyvalent carboxylic acid partial ester monomers such as monobutyl fumarate, monobutyl maleate, and mono-2-hydroxypropyl maleate; and the like. Among these, preferred are ethylenically unsaturated monocarboxylic acids, and particularly preferred is methacrylic acid. These ethylenically unsaturated carboxylic acid monomers can also be used as alkali metal salts or ammonium salts. Further, these ethylenically unsaturated carboxylic acid monomers can be used alone or in combination. The content of ethylenically unsaturated carboxylic acid monomer units formed from such an ethylenically unsaturated carboxylic acid monomer in the nitrile group-containing conjugated diene copolymer is preferably 2 to 5 wt%, more preferably 2 to 4.5 wt%, still more preferably 2.5 to 4.5 wt%. By adjusting the content of ethylenically unsaturated carboxylic acid monomer units within the above ranges, a molded article, such as a dip-molded article, having sufficient tear strength and having a better texture can be produced.

The content of other monomer units formed from the different ethylenically unsaturated monomer in the nitrile group-containing conjugated diene copolymer is preferably 10 wt% or less, more preferably 5 wt% or less, still more preferably 3 wt% or less.

The nitrile group-containing conjugated diene copolymer can be obtained by copolymerization of a monomer mixture containing the aforementioned monomers, and a preferred method is copolymerization by emulsion polymerization. As an emulsion polymerization method, a conventionally known method can be used.

In the emulsion polymerization of the monomer mixture containing the aforementioned monomers, polymerization auxiliary materials generally used, such as an emulsifier, a polymerization initiator, and a molecular weight modifier, can be used. These polymerization auxiliary materials can be added by any method without limitation, and any method such as initial one-time addition, portion-wise addition, or continuous addition may be employed.

Examples of emulsifiers include, but should not be limited to, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as alkylbenzene sulfonates including potassium dodecylbenzenesulfonate and sodium dodecylbenzenesulfonate, higher alcohol sulfate ester salts, alkyl sulfosuccinates; cationic emulsifiers such as alkyl trimethyl ammonium chlorides, dialkyl ammonium chlorides, and benzyl ammonium chloride; copolymerizable emulsifiers such as sulfo esters of $\alpha,\beta$-unsaturated carboxylic acids, sulfate esters of $\alpha,\beta$-unsaturated carboxylic acids, and sulfoalkyl aryl ethers; and the like. Among these, preferred are anionic emulsifiers, more preferred are alkylbenzene sulfonates, and particularly preferred are potassium dodecylbenzenesulfonate and sodium dodecylbenzenesulfonate. These emulsifiers can be used alone or in combination. The amount of the emulsifier used is preferably 0.1 to 10 parts by weight relative to 100 parts by weight of the monomer mixture.

Examples of polymerization initiators include, but should not be limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, 2,5-dimethylhexane-2,5-dihydroperoxide, di-t-butyl peroxide, di-$\alpha$-cumyl peroxide, acetyl peroxide, isobutyryl peroxide, and benzoyl peroxide; azo compounds such as azobisisobutyronitrile, azobis-2,4-dimethylvaleronitrile, and methyl azobisisobutyrate; and the like. These polymerization initiators can be used alone or in combination. The amount of the polymerization initiator(s) used is preferably 0.01 to 10 parts by weight, more preferably 0.01 to 2 parts by weight relative to 100 parts by weight of the monomer mixture.

Further, the peroxide initiators can be used in combination with reductants as redox polymerization initiators. Examples of such reductants include, but should not be limited to, compounds containing reduced metal ions, such as ferrous sulfate and cuprous naphthenate; sulfonic acid compounds such as sodium methanesulfonate; amine compounds such as dimethylaniline; and the like. These reductants can be used alone or in combination. The amount of the reductant(s) is 3 to 1000 parts by weight relative to 100 parts by weight of the peroxide(s).

The amount of water used in emulsion polymerization is preferably 80 to 600 parts by weight, particularly preferably 100 to 200 parts by weight relative to 100 parts by weight of all monomers used.

Examples of the method of adding the monomers include a method of adding the monomers to be used into a reactor all at once; a method of continuously or intermittently adding monomers as the polymerization proceeds; a method of adding a portion of the monomers to react the monomers to a specific conversion ratio, and then continuously or intermittently adding the remaining monomers to complete polymerization; and the like. Any one of the methods may be used. When the monomers are mixed and the mixture is continuously or intermittently added, the composition of the mixture may be fixed or varied. Further, the monomers used may be mixed in advance and then added to the reactor, or may be separately added to the reactor.

Further, polymerization auxiliary materials such as a chelating agent, a dispersant, a pH adjuster, an oxygen scavenger, and a particle size modifier can be used as needed, and both of the type and the amount of these polymerization auxiliary materials used are not particularly limited.

The polymerization temperature during emulsion polymerization, which is not particularly limited, is usually 3 to 95°C, preferably 5 to 60°C. The polymerization time is about 5 to 40 hours.

The monomer mixture is subjected to emulsion polymerization as described above, and the polymerization reaction is stopped by cooling the polymerization system or adding a polymerization terminator when a predetermined polymerization conversion ratio is reached. The polymerization conversion ratio at which the polymerization reaction is stopped is preferably 90 wt% or more, more preferably 93 wt% or more.

Examples of polymerization terminators include, but should not be limited to, hydroxylamine, hydroxyamine sulfate, diethylhydroxylamine, and hydroxyamine sulfonic acid and alkali metal salts thereof, sodium dimethyldithiocarbamate, hydroquinone derivatives, catechol derivatives, and aromatic hydroxydithiocarboxylic acids, such as hydroxydimethylbenzenethiocarboxylic acid, hydroxydiethylbenzenedithiocarboxylic acid, and hydroxydibutylbenzenedithiocarboxylic acid, and alkali metal salts thereof, and the like. The amount of the polymerization terminator used is preferably 0.05 to 2 parts by weight relative to 100 parts by weight of the monomer mixture.

After the polymerization reaction is stopped, as needed, unreacted monomers are removed, and the solids content and the pH are adjusted, so that a latex of the nitrile group-containing conjugated diene copolymer can be obtained.

Further, an antioxidant, a preservative, an antibacterial agent, a dispersant, and the like may be appropriately added to the latex of the nitrile group-containing conjugated diene copolymer.

The number average particle size of the latex of the nitrile group-containing conjugated diene copolymer is preferably 60 to 300 nm, more preferably 80 to 150 nm. The particle size can be adjusted to a desired value, for example, by controlling the amounts of emulsifier(s) and polymerization initiator(s) used.

As described above, a deproteinized natural rubber (protein-free natural rubber) latex can be used as the conjugated diene polymer latex. One usable latex of a deproteinized natural rubber is that known as so-called "deproteinized natural rubber latex" obtained by a known protein removal method such as a method involving decomposing proteins in a natural rubber latex with a protease or a surfactant, and removing the proteins by washing or centrifugation.

The conjugated diene polymer used in the present invention can be, but not limited to, a synthetic polyisoprene, a styrene-isoprene-styrene block copolymer (SIS), a nitrile group-containing conjugated diene copolymer, a deproteinized natural rubber, or the like as described above. Butadiene polymer, a styrene-butadiene copolymer, or the like may also be used.

Such a butadiene polymer may be a homopolymer of 1,3-butadiene as a conjugated diene monomer, or may be a copolymer formed by copolymerization of 1,3-butadiene as a conjugated diene monomer with a different ethylenically unsaturated monomer copolymerizable with 1,3-butadiene.

Further, such a styrene-butadiene copolymer may be a copolymer formed by copolymerization of 1,3-butadiene as a conjugated diene monomer with styrene, or may be a copolymer formed by copolymerization of these monomers with a different ethylenically unsaturated monomer that is copolymerizable with the former monomers and is used as required in addition to the former monomers.

The conjugated diene polymer used in the present invention may be an acid-modified conjugated diene polymer obtained by modification with a monomer having an acidic group, and is preferably a carboxy-modified conjugated diene polymer prepared through carboxy modification. The carboxy-modified conjugated diene polymer can be obtained by modifying the aforementioned conjugated diene polymer with a monomer having a carboxyl group. It should be noted that in the case where an ethylenically unsaturated carboxylic acid monomer is incorporated as a different ethylenically unsaturated monomer into a nitrile group-containing conjugated diene copolymer, the modification with a monomer having a carboxyl group (described later) is not always necessary because the nitrile group-containing conjugated diene copolymer is already carboxy-modified.

The conjugated diene polymer can be modified with the monomer having a carboxyl group by any method without limitation. Examples thereof include graft-polymerization of the monomer having a carboxyl group onto the conjugated diene polymer in an aqueous phase. Any method can be used without limitation to graft-polymerize the monomer having a carboxyl group onto the conjugated diene polymer in an aqueous phase, and conventionally known methods may be used. One preferred example is that after the monomer having a carboxyl group and a graft polymerization catalyst are added to the conjugated diene polymer latex, the monomer having a carboxyl group is reacted with the conjugated diene polymer in an aqueous phase.

Examples of graft polymerization catalysts include, but should not be limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide; azo compounds such as 2,2'-azobisisobutyronitrile, azobis-2,4-dimethylvaleronitrile, and methyl azobisisobutyrate; and the like. Preferred are organic peroxides, and particularly preferred is 1,1,3,3-tetramethylbutyl hydroperoxide from the viewpoint of producing a molded article, such as a dip-molded article, having further enhanced tensile strength. These graft polymerization catalysts may be used alone or in combination.

The aforementioned graft polymerization catalysts can be used alone or in combination. Although the amount of the graft polymerization catalyst varies depending on its type, the amount is preferably 0.1 to 10 parts by weight, more preferably 0.2 to 5 parts by weight relative to 100 parts by weight of the conjugated diene polymer. Further, the graft polymerization catalyst can be added by any method without limitation, and any known addition method such as one-time addition, portion-wise addition, or continuous addition can be used.

Organic peroxides can be used in combination with reductants as redox polymerization initiators. Examples of such reductants include, but should not be limited to, compounds containing reduced metal ions, such as ferrous sulfate and cuprous naphthenate; sulfinates such as sodium hydroxymethanesulfinate; amine compounds such as dimethylaniline; and the like. These reductants may be used alone or in combination.

Although the amount of reductant(s) added is not particularly limited, the amount is preferably 0.01 to 1 part by weight relative to 1 part by weight of organic peroxide(s).

Any method for adding the organic peroxide and the reductant can be used without limitation, and any known addition method such as one-time addition, portion-wise addition, or continuous addition can be used.

Although the reaction temperature during the reaction of the monomer having a carboxyl group with the conjugated diene polymer is not particularly limited, the reaction temperature is preferably 15 to 80°C, more preferably 30 to 50°C. The reaction time for the reaction of the monomer having a carboxyl group with the conjugated diene polymer may be appropriately set according to the aforementioned reaction temperature, and is preferably 30 to 300 minutes, more preferably 60 to 120 minutes.

The solids content of the conjugated diene polymer latex before the reaction of the monomer having a carboxyl group with the conjugated diene polymer, although not particularly limited, is preferably 5 to 60 wt%, more preferably 10 to 40 wt%.

Examples of monomers having a carboxyl group include ethylenically unsaturated monocarboxylic acid monomers such as acrylic acid and methacrylic acid; ethylenically unsaturated polyvalent carboxylic acid monomers such as itaconic acid, maleic acid, fumaric acid, and butene tricarboxylic acid; ethylenically unsaturated polyvalent carboxylic acid partial ester monomers such as monobutyl fumarate, monobutyl maleate, and mono-2-hydroxypropyl maleate; polyvalent carboxylic acid anhydrides such as maleic anhydride and citraconic anhydride; and the like. Preferred are ethylenically unsaturated monocarboxylic acid monomers, more preferred are acrylic acid and methacrylic acid, and particularly preferred is methacrylic acid because further remarkable effects due to carboxy modification are achieved. These monomers may be used alone or in combination. The aforementioned carboxyl group is intended to encompass forms of salts with alkali metals, ammonia, or the like.

The amount of the monomer having a carboxyl group used is preferably 0.01 to 100 parts by weight, more preferably 0.01 to 40 parts by weight, still more preferably 0.5 to 20 parts by weight, further still more preferably 2 to 5 parts by weight relative to 100 parts by weight of the conjugated diene polymer. The use of the monomer having a carboxyl group in an amount within the above ranges results in a latex composition which has more appropriate viscosity and therefore is easy to transfer, and a molded article, such as a dip-molded article, formed using such a latex composition has further enhanced tear strength.

The monomer having a carboxyl group can be added to the conjugated diene polymer latex by any method without limitation, and any known addition method such as one-time addition, portion-wise addition, or continuous addition can be used.

The degree of modification of the carboxy-modified conjugated diene polymer with the monomer having a carboxyl group may be appropriately controlled according to the intentional use of a molded article to be obtained, such as a dip-molded article, and is preferably 0.01 to 10 wt%, more preferably 0.2 to 5 wt%, still more preferably 0.3 to 3 wt%, further still more preferably 0.4 to 2 wt%, particularly preferably 0.4 to 1 wt%. Thee degree of modification is represented by the following formula:

$$\text{Degree of modification (wt\%)} = (X/Y) \times 100$$

In the above formula, X represents the weight of units of the monomer having a carboxyl group in the carboxy-modified conjugated diene polymer, and Y represents the weight of the carboxy-modified conjugated diene polymer. X can be determined by performing $^1$H-NMR analysis on the carboxy-modified conjugated diene polymer and performing a calculation based on the results of the $^1$H-NMR analysis, or by determining its acid content by neutralization titration and performing a calculation based on the resulting acid content.

The latex of the conjugated diene polymer used in the present invention (including the acid-modified conjugated diene polymer) may contain additives that are generally blended in the field of latex, such as a pH adjuster, a defoamer, a preservative, a chelating agent, an oxygen scavenger, a dispersant, and an antioxidant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Preferred are alkali metal hydroxides or ammonia.

The solids content of a latex of the conjugated diene polymer used in the present invention (including the acid-modified conjugated diene polymer) is preferably 30 to 70 wt%, more preferably 40 to 70 wt%, still more preferably 50 to 70 wt%. Adjusting the solids content within the above ranges is more effective in suppressing occurrence of aggregates in the latex, and is more effective in suppressing separation of polymer particles during storage of the latex.

The latex composition used in the present invention also contains a xanthogen compound in addition to the aforementioned conjugated diene polymer latex. The xanthogen compound vulcanizes a conjugated diene polymer contained in the latex composition used in the present invention, and acts as a vulcanization accelerator during formation of a molded article such as a dip-molded article. The xanthogen compound acts as a vulcanization accelerator in the latex composition, and is decomposed into an alcohol, carbon disulfide, and the like due to heat and the like applied during vulcanization after the vulcanization is performed. For example, the xanthogen compound is decomposed into an alcohol, carbon disulfide, and the like due to heat applied during production of a molded article such as a dip-molded article (heat at about 100 to 130°C during vulcanization of the conjugated diene polymer), and further, the components generated by the decomposition (an alcohol, carbon disulfide, and the like) volatilize. As a result, the resulting molded article, such as a dip-molded article, contains a reduced amount of residual xanthogen compound. In other words, the latex composition according to the present invention contains a xanthogen compound as a vulcanization accelerator and is devoid of any vulcanization accelerators (such as dithiocarbamate-based vulcanization accelerators or thiazole-based vulcanization accelerators) which trigger occurrence of delayed (Type IV) allergic reactions in the related art., and can provide a molded article, such as a dip-molded article, containing a reduced amount of residual xanthogen compound. Therefore, the resulting molded article such as a dip-molded article can avoid delayed (Type IV) allergic reactions in addition to that of immediate (Type I) allergic reactions.

Examples of the xanthogen compound include, but should not be limited to, xanthic acids, xanthates, xanthogen disulfides (compounds with two xanthic acids bonded via a sulfur atom or the like), xanthogen polysulfides (compounds with three or more xanthic acids bonded via sulfur atoms or the like), and the like.

Xanthates are not particularly limited as long as they have a xanthic acid structure. Examples thereof include compounds represented by a general formula $(ROC(=S)S)x\text{-}Z$ (where R represents a linear or branched hydrocarbon, and Z represents a metal atom; and x represents a numerical value which matches the valence of Z and is usually 1 to 4, preferably 2 to 4, particularly preferably 2).

Examples of xanthates represented by the above general formula $(ROC(=S)S)x\text{-}Z$, include, but should not be limited to, zinc dimethyl xanthate, zinc diethyl xanthate, zinc dipropyl xanthate, zinc diisopropyl xanthate, zinc dibutyl xanthate, zinc dipentyl xanthate, zinc dihexyl xanthate, zinc diheptyl xanthate, zinc dioctyl xanthate, zinc di(2-ethylhexyl) xanthate, zinc didecyl xanthate, zinc didodecyl xanthate, potassium dimethyl xanthate, potassium ethyl xanthate, potassium propyl xanthate, potassium isopropyl xanthate, potassium butyl xanthate, potassium pentyl xanthate, potassium hexyl xanthate, potassium heptyl xanthate, potassium octyl xanthate, potassium 2-ethylhexyl xanthate, potassium decyl xanthate, potassium dodecyl xanthate, sodium methyl xanthate, sodium ethyl xanthate, sodium propyl xanthate, sodium isopropyl xanthate, sodium butyl xanthate, sodium pentyl xanthate, sodium hexyl xanthate, sodium heptyl xanthate, sodium octyl xanthate, sodium 2-ethylhexyl xanthate, sodium decyl xanthate, sodium dodecyl xanthate, and the like. Among these, preferred are xanthates where x in the above general formula $(ROC(=S)S)x\text{-}Z$ is 2 or more, more preferred are isopropyl xanthates and butyl xanthates, and particularly preferred are zinc diisopropyl xanthate and zinc dibutyl xanthate. These xanthates may be used alone or in combination.

Xanthogen disulfides are compounds with two xanthic acids bonded via sulfur atoms or the like. Examples thereof include, but should not be limited to, dimethyl xanthogen disulfide, diethyl xanthogen disulfide, diisopropyl xanthogen disulfide, dibutyl xanthogen disulfide, dimethyl xanthogen polysulfide, diethyl xanthogen polysulfide, diisopropyl xanthogen polysulfide, dibutyl xanthogen polysulfide, and the like. Among these, preferred are diisopropyl xanthogen disulfide and dibutyl xanthogen disulfide.

Xanthogen polysulfides are compounds with three or more xanthic acids bonded via sulfur atoms or the like, and examples thereof include xanthogen trisulfides with three xanthic acids bonded via sulfur, xanthogen tetrasulfides with four xanthic acids bonded via sulfur, xanthogen pentasulfides with five xanthic acids bonded via sulfur, and the like.

Among these exemplary xanthogen compounds listed above, preferred are xanthates, and particularly preferred are zinc diisopropyl xanthate and zinc dibutyl xanthate because a molded article, such as a dip-molded article, having further enhanced tear strength can be obtained.

Although the latex composition may contain one of these xanthogen compounds alone, the latex composition preferably contains two or more of them. For example, in the case where the latex composition contains a xanthic acid, the latex composition may contain two or more xanthogen compounds as a result of conversion of a portion of the xanthic acid to a salt form. Alternatively, a portion of the xanthic acid mixed in the latex composition may be present in the form of a xanthogen disulfide or a xanthogen polysulfide due to the action of the sulfur-based vulcanizing agent in the latex composition. Likewise, also in the case where the latex composition contains a xanthate, a xanthogen disulfide, or a xanthogen polysulfide, these each may be present in the form of any one of xanthic acid, a xanthate, a xanthogen disulfide, and a xanthogen polysulfide.

The amount of the xanthogen compound used (the total amount of a plurality of xanthogen compounds, if present) is preferably 0.01 to 10 parts by weight, more preferably 0.1 to 7 parts by weight, still more preferably 0.5 to 5 parts by weight, further still more preferably 1 to 3 parts by weight relative to 100 parts by weight of the conjugated diene polymer contained in the conjugated diene polymer latex. The use of the xanthogen compound in the amount within the above ranges provides a molded article, such as a dip-molded article, which can avoid delayed (Type IV) allergic reactions and has further enhanced tensile strength.

The xanthogen compound may be blended with the conjugated diene polymer latex by any method without limitation. For example, preferably, an aqueous dispersion of the xanthogen compound dispersed in water using a surfactant is blended with the conjugated diene polymer latex. In other words, preferably, an aqueous dispersion of the xanthogen compound is prepared by dispersing the xanthogen compound in water using a surfactant, and the resulting aqueous dispersion of the xanthogen compound is blended with the conjugated diene polymer latex.

Examples of the surfactant used in dispersion of the xanthogen compound in water include, but should not be limited to, nonionic surfactants, nonionic anionic surfactants, anionic surfactants, and the like. Among these, preferred is use of nonionic surfactants and nonionic anionic surfactants to provide a molded article, such as a dip-molded article, having further enhanced tensile strength.

Examples of anionic surfactants used in dispersion of the xanthogen compound in water include, but should not be limited to, the same anionic surfactants as those used to disperse the sulfur-based vulcanizing agent in water to prepare an aqueous dispersion of the sulfur-based vulcanizing agent.

Any nonionic surfactant can be used to disperse the xanthogen compound in water as long as the main chain of its molecule has a segment capable of acting as a nonionic surfactant. Suitable examples of such a segment capable of acting as a nonionic surfactant include polyoxyalkylene structures.

Specific examples of such nonionic surfactants include polyoxyalkylene glycols, polyoxyalkylene alkyl ethers, polyoxyalkylene alkyl phenyl ethers, polyoxyethylene styrenated phenyl ethers, polyoxyethylene (hydrogenated) castor oils, polyoxyethylene alkylamines, fatty acid alkanolamides, and the like.

Examples of polyoxyalkylene glycols include polyoxyethylene glycol, polyoxypropylene glycol, polyoxypropylene glycol ethylene oxide adducts such as polyoxyethylene polyoxypropylene glycol, and the like.

Examples of polyoxyalkylene alkyl ethers include linear or branched ethers to which 1 to 50 (preferably 1 to 10) propylene oxides and/or ethylene oxides are added. Among these, examples thereof include linear or branched ethers to which 1 to 50 (preferably 1 to 10) propylene oxides are added, linear or branched ethers to which 1 to 50 (preferably 1 to 10) ethylene oxides are added, linear or branched ethers to which 2 to 50 (preferably 2 to 10) ethylene oxides and propylene oxides in total are added in a block or random manner, and the like. Examples of polyoxyalkylene alkyl ethers include polyoxyethylene oleyl ether, polyoxyethylene octyl dodecyl ether, polyoxyethylene dodecyl ether, polyoxyethylene lauryl ether, and the like. Among these, preferred are polyoxyethylene oleyl ether and polyoxyethylene octyl dodecyl ether.

Examples of polyoxyalkylene alkyl phenyl ethers include compounds of alkyl phenols to which 1 to 50 (preferably 1 to 10) propylene oxides and/or ethylene oxides are added, and the like.

Examples of polyoxyethylene styrenated phenyl ethers include ethylene oxide adducts of (mono-, di-, or tri-)styrenated phenols, and the like. Among these, preferred is polyoxyethylene distyrenated phenyl ether which is an ethylene oxide adduct of distyrenated phenol.

Examples of polyoxyethylene (hydrogenated) castor oils include ethylene oxide adducts of castor oil or hydrogenated castor oil.

Examples of fatty acid alkanolamides include lauric acid diethanolamide, palmitic acid diethanolamide, myristic acid diethanolamide, stearic acid diethanolamide, oleic acid diethanolamide, palm oil fatty acid diethanolamide, coconut oil fatty acid diethanolamide, and the like.

Among these nonionic surfactants, preferred are nonionic surfactants having a polyoxyalkylene structure, more preferred are nonionic surfactants having a polyoxyethylene structure, still more preferred are hydrocarbylated ethers of polyoxyethylene, further still more preferred are polyoxyethylene alkyl ethers and polyoxyethylene distyrenated phenyl ether, and particularly preferred is polyoxyethylene distyrenated phenyl ether. These nonionic surfactants may be used alone or in combination.

Any nonionic anionic surfactant can be used to disperse the xanthogen compound in water as long as the main chain of its molecule has a segment capable of acting as a nonionic surfactant and a segment capable of acting as an anionic surfactant.

Examples of such nonionic anionic surfactants include a compound represented by the general formula (1) below:

$$R^1\text{-O-}(CR^2R^3CR^4R^5)_n\text{-SO}_3M \qquad (1)$$

(In the general formula (1) above, $R^1$ represents a $C_6$ to $C_{16}$ alkyl group or a $C_6$ to $C_{14}$ aryl group which may be substituted by a $C_1$ to $C_{25}$ alkyl group; $R^2$ to $R^5$ each independently represent a group selected from the group consisting of hydrogen and a methyl group; M represents an alkali metal atom or ammonium ion; and n represents 3 to 40.)

Specific examples of the compound represented by the above general formula (1) include polyoxyethylene alkyl ether sulfates such as polyoxyethylene lauryl ether sulfate, polyoxyethylene cetyl ether sulfate, polyoxyethylene stearyl ether sulfate, and polyoxyethylene oleyl ether sulfate; polyoxyethylene aryl ether sulfates such as polyoxyethylene nonyl phenyl ether sulfate, polyoxyethylene octyl phenyl ether sulfate, and polyoxyethylene distyryl ether sulfate; and the like.

Among these nonionic anionic surfactants, preferred are nonionic anionic surfactants having a polyoxyalkylene structure, and more preferred are nonionic anionic surfactants having a polyoxyethylene structure. These nonionic anionic surfactants may be used alone or in combination.

Although the content of the nonionic surfactant and/or the nonionic anionic surfactant in the aqueous dispersion of the xanthogen compound is not particularly limited, the content is preferably 1 to 50 parts by weight, more preferably 3 to 30 parts by weight, still more preferably 5 to 20 parts by weight relative to 100 parts by weight of the xanthogen compound. When a combination of a nonionic surfactant with a nonionic anionic surfactant is used, the total amount thereof preferably falls within the above ranges.

The method of preparing an aqueous dispersion of the xanthogen compound is preferably a method of mixing the xanthogen compound, the surfactant, and water, and then subjecting the mixed solution to a pulverizing treatment. Here, the pulverizing treatment is not particularly limited as long as it is a treatment by which the xanthogen compound contained in the aqueous dispersion can be pulverized and aggregation of the xanthogen compound can be suppressed. Examples thereof include methods using known crushing machines, such as a method using a crushing machine using shear action or grinding action and a method using an agitating crushing machine. Specifically, a crushing machine such as a roll mill, a hammer mill, a vibration mill, a jet mill, a ball mill, a planetary ball mill, a bead mill, a sand mill, or a three-roll mill can be used. Among these, preferred are methods of performing the pulverizing treatment using a ball mill, a planetary ball mill, or a bead mill.

For example, in the case where a ball mill is used in the pulverizing treatment, the pulverizing treatment is suitably performed using a ball mill with a medium having a medium size of preferably $\phi$5 to $\phi$50 mm, more preferably $\phi$10 to $\phi$35 mm at a rotational speed of preferably 10 to 300 rpm, more preferably 10 to 100 rpm for a treatment time of preferably 24 to 120 hours, more preferably 24 to 72 hours. In the case where a planetary ball mill is used, the pulverizing treatment is suitably performed using a planetary ball mill with a medium having a medium size of preferably $\phi$0.1 to $\phi$5 mm, more preferably $\phi$0.3 to $\phi$3 mm at a rotational speed of preferably 100 to 1000 rpm, more preferably 100 to 500 rpm for a treatment time of preferably 0.25 to 5 hours, more preferably 0.25 to 3 hours. Further, in the case where a bead mill is used, the pulverizing treatment is suitably performed using a bead mill with a medium having a medium size of preferably $\phi$0.1 to $\phi$3 mm, more preferably $\phi$0.1 to $\phi$1 mm at a rotational speed of preferably 1000 to 10000 rpm, more preferably 1000 to 5000 rpm for a treatment time of preferably 0.25 to 5 hours, more preferably 0.25 to 3 hours.

Moreover, it is preferred that the latex composition used in the present invention further contain a sulfur-based vulcanizing agent. Examples of sulfur-based vulcanizing agents include, but should not be limited to, sulfur-containing compounds such as sulfur such as powder sulfur, flowers of sulfur, precipitated sulfur, colloidal sulfur, surface-treated sulfur, and insoluble sulfur; sulfur chloride, sulfur dichloride, morpholine disulfide, alkyl phenol disulfides, caprolactam disulfide (N,N'-dithio-bis(hexahydro-2H-azepin-2-one)), phosphorus-containing polysulfides, polymer polysulfides, and 2-(4'-morpholinodithio)benzothiazole; and the like. Among these, sulfur can be preferably used. These sulfur-based vulcanizing agents can be used alone or in combination.

Although the amount of the sulfur-based vulcanizing agent used is not particularly limited, the amount is usually 0.1 to 10 parts, preferably 0.1 to 3 parts by weight, more preferably 0.2 to 2 parts by weight, still more preferably 0.3 to 1 part by weight relative to 100 parts by weight of the conjugated diene polymer contained in the latex composition. Adjusting the content of the sulfur-based vulcanizing agent within the above ranges can result in a molded article, such as a dip-molded article, which can avoid delayed (Type IV) allergic reactions and have further enhanced tensile strength.

Further, the latex composition used in the present invention may contain an activator as needed in addition to the conjugated diene polymer latex, the xanthogen compound, and the sulfur-based vulcanizing agent optionally used.

By adding the activator to the latex composition, the activator with the aforementioned xanthogen compound acts as a vulcanization accelerator when the conjugated diene polymer in the latex composition used in the present invention is vulcanized to produce a molded article such as a dip-molded article, and thus, a molded article, such as a dip-molded article, having further enhanced tear strength is obtained.

Although any activator can be used without limitation, use of a metal compound is preferred because a molded article, such as a dip-molded article, having further enhanced tear strength is obtained. Examples of metal compounds include, but should not be limited to, metal oxides, metal compounds containing at least one carbon atom, and the like. Although metals forming such metal compounds are not particularly limited, preferred is a typical metal (at least one element selected from the group consisting of elements of Groups 1, 2, 12, 13, 14, 15, 16, 17, and 18), more preferred are elements of Groups 2, 12, 13, and 14, still more preferred are zinc, magnesium, calcium, aluminum, and lead, and particularly preferably are zinc, magnesium, and calcium. Most preferred is zinc. These metal compounds may be used alone or in combination.

Although metal oxides are not particularly limited, preferred are zinc oxide, magnesium oxide, titanium oxide, calcium oxide, lead oxide, iron oxide, copper oxide, tin oxide, nickel oxide, chromium oxide, cobalt oxide, and aluminum oxide, and more preferred is zinc oxide because a molded article, such as a dip-molded article, having further enhanced tear strength is obtained.

As metal compounds containing at least one carbon atom, preferred are carbonates, hydrogen carbonates, hydroxides, and organic metal compounds, and more preferred are carbonates, hydrogen carbonates, and organic metal compounds because a molded article, such as a dip-molded article, having further enhanced tear strength is obtained. Among these, particularly preferred are inorganic salts such as carbonates and hydrogen carbonates because these compounds themselves have high stability and are highly available.

The amount of the activator used is preferably 0.01 to 10 parts by weight, more preferably 0.1 to 5 parts by weight, still more preferably 1 to 3 parts by weight relative to 100 parts by weight of the conjugated diene polymer contained in the latex composition. By adjusting the amount of the activator used within the above ranges, a molded article, such as a dip-molded article, having further enhanced tear strength can be obtained.

The activator can be blended by any method without limitation as long as it is finally mixed with the conjugated diene polymer latex.

Moreover, the latex composition may further contain a vulcanization accelerator as long as a molded article, such as a dip-molded article, to be obtained can avoid delayed (Type IV) allergic reactions.

Usable vulcanization accelerators can be those usually used in dip molding. Examples thereof include dithiocarbamic acids, such as diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbaylthio)benzothiazole, 2-(2,6-dimethyl-4-morpholinothio)benzothiazole, 2-(4'-morpholinodithio)benzothiazole, 4-morpholinyl-2-benzothiazyl disulfide, 1,3-bis(2-benzothiazyl mercaptomethyl)urea, and the like. These vulcanization accelerators can be used alone or in combination. The content of the xanthogen compound is preferably more than 50 wt%, more preferably 80 wt% or more, still more preferably 100 wt% relative to the total amount of the xanthogen compound and the vulcanization accelerator to obtain a molded film, such as a dip-molded article, which is more likely to avoid delayed (Type IV) allergic reactions.

Moreover, the latex composition can further contain optional compounding agents such as an antioxidant; a dispersant; a reinforcing agent such as carbon black, silica, or talc; a filler such as calcium carbonate or clay; an ultraviolet absorbing agent; and a plasticizer.

Examples of antioxidants include sulfur atom-free phenolic antioxidants such as 2,6-di-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl)propionate, styrenated phenol, 2,2'-methylene-bis(6-$\alpha$-methyl-benzyl-p-cresol), 4,4'-methylenebis(2,6-di-t-butylphenol), 2,2'-methylene-bis(4-methyl-6-t-butylphenol), alkylated bisphenols, and a butylated reaction product of p-cresol with dicyclopentadiene; thiobisphenolic antioxidants such as 2,2'-thiobis-(4-methyl-6-t-butylphenol), 4,4'-thiobis-(6-t-butyl-o-cresol), and 2,6-di-t-butyl-4-(4,6-bis(octylthio)-1,3,5-triazine-2-ylamino)phenol; phosphite ester antioxidants such as tris(nonylphenyl)phosphite, diphenylisodecyl phosphite, and tetraphenyl dipropylene glycol diphosphite; sulfur ester-based antioxidants such as dilauryl thiodipropionate; amine-based antioxidants such as phenyl-$\alpha$-naphthylamine, phenyl-$\beta$-naphthylamine, p-(p-toluenesulfonylamide)-diphenylamine, 4,4'-($\alpha$,$\alpha$-dimethylbenzyl)diphenylamine, N,N-diphenyl-p-phenylenediamine, N-isopropyl-N'-phenyl-p-phenylenediamine, and butyl aldehyde-aniline condensation products; quinoline antioxidants such as 6-ethoxy-2,2,4-trimethyl-1,2-dihydroquinoline; hydroquinone antioxidants such as 2,5-di-(t-amyl)hydroquinone; and the like. These antioxidants can be used alone or in combination.

The content of the antioxidant is preferably 0.05 to 10 parts by weight, more preferably 0.1 to 5 parts by weight, still more preferably 1 to 3 parts by weight relative to 100 parts by weight of the conjugated diene polymer.

These various compounding agents can be mixed with the latex composition by any method without limitation. Examples thereof include a method of preparing a composition containing the conjugated diene polymer latex, the sulfur-based vulcanizing agent, and the xanthogen compound as described above, and then mixing the composition with these various compounding agents as needed using a dispersing machine such as a ball mill, a kneader, or a disper; and the like. At least a portion of the various compounding agents may be blended after aging (described later).

The solids content of the latex composition used in the present invention is preferably 10 to 60 wt%, more preferably 10 to 55 wt%.

In the present invention, to obtain a molded article, such as a dip-molded article, having sufficient mechanical properties, the latex composition is preferably subjected to aging (pre-crosslinking or pre-vulcanization) before being molded, e.g., dip molded. The time for aging (pre-vulcanization) is not particularly limited, and is preferably 8 to 120 hours, more preferably 24 to 72 hours. The temperature during aging (pre-vulcanization) is not particularly limited, and is preferably 20 to 40°C.

<Method for producing molded article>

The method for producing a molded article according to the present invention comprises a step of washing a molded article (pre-washed molded article) with hot water at 40 to 100°C, the molded article being prepared from the aforementioned latex composition containing the conjugated diene polymer latex and the xanthogen compound.

In the present invention, using the latex composition containing the conjugated diene polymer latex and the xanthogen compound, the pre-washed molded article can be prepared by any method without limitation. Suitable is a method of dip molding the latex composition. In other words, the pre-washed molded article and a molded article prepared by washing the pre-washed molded article are suitably dip-molded articles prepared through dip molding.

Dip molding is a method of immersing a mold into the latex composition to deposit the composition on the surface of the mold, then pulling the mold out of the composition, and thereafter drying the composition deposited on the surface of the mold. The mold before the immersion into the latex composition may be preheated. Further, a coagulant can be used as needed before the immersion of the mold into the latex composition or after the pullout of the mold from the latex composition.

Specific examples of how to use a coagulant include a method (anode coagulant dipping) of immersing the mold into a coagulant solution before immersion into the latex composition to deposit the coagulant onto the mold, a method (Teague coagulant dipping) of immersing the mold on which the latex composition is deposited in a coagulant solution, and the like. Preferred is anode coagulant dipping because a dip-molded article having less thickness unevenness is obtained.

Specific examples of coagulants include water-soluble polyvalent metal salts such as metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate. Among these, preferred are calcium salts, and more preferred is calcium nitrate. These water-soluble polyvalent metal salts can be used alone or in combination.

Such coagulants can be generally used as solutions in water, an alcohol, or a mixture thereof, and are preferably used as aqueous solutions. Such aqueous solutions may further contain a water-soluble organic solvent such as methanol or ethanol and a nonionic surfactant. Although the concentration of the coagulant varies depending on the type of the water-soluble polyvalent metal salt, it is preferably 5 to 50 wt%, more preferably 10 to 30 wt%.

After the mold is pulled out of the latex composition, usually, the mold is heated to dry the deposit formed on the mold. The conditions for drying are appropriately selected.

In the next step, the dip-molded layer formed on the mold is cross-linked (vulcanized) by heating. The dip-molded layer can be cross-linked (vulcanized) by performing a heat treatment at a temperature of usually 80 to 150°C for preferably 10 to 130 minutes. As a heating method, external heating methods using infrared rays or heated air or internal heating methods using high-frequency waves can be used. Among these, preferred is external heating using heated air. Before cross-linking, the dip-molded layer may be subjected to leaching to remove water-soluble impurities (such as excess emulsifier and coagulant). The leaching is performed by immersing the dip-molded layer in water, preferably in hot water at 30 to 70°C for about a few tens of seconds to several minutes. By adjusting the time for leaching within the above ranges, water-soluble impurities can be sufficiently removed while elusion of the xanthogen compound and/or the sulfur-based vulcanizing agent contained in the dip-molded layer from the dip-molded layer can be suppressed.

In the next step, the dip-molded layer is detached from the mold for dip molding to obtain a pre-washed molded article (dip-molded article). As a detaching method, a method of peeling the layer by hand or by water pressure or pressure of compressed air can be used. After the detaching, a heat treatment at a temperature of 60 to 120°C for 10 to 120 minutes may be further performed.

The dip-molded layer has a film thickness of preferably 0.03 to 0.50 mm, more preferably 0.05 to 0.40 mm, particularly preferably 0.08 to 0.30 mm.

In the present invention, the pre-washed molded article thus obtained is washed with hot water at 40 to 100°C. This can result in a molded article which can avoid delayed (Type IV) allergic reactions as well as that of immediate (Type I) allergic reactions, has a reduced odor, and has excellent color tone.

Here, in the present invention, the xanthogen compound is used as the vulcanization accelerator, and conventional vulcanization accelerators which cause delayed (Type IV) allergic reactions (such as dithiocarbamate-based vulcanization accelerators and thiazole-based vulcanization accelerators) are not contained. Thus, a molded article, such as a dip-molded article, to be obtained can avoid delayed (Type IV) allergic reactions as well as that of immediate (Type I) allergic reactions. On the other hand, the present inventor, who has conducted research, has found a problem that such use of the xanthogen compound as the vulcanization accelerator increases the odor of the molded article to be obtained, and that to solve this problem, washing with hot water at 40 to 100°C can reduce the odor of the molded article to be obtained and ensure excellent color tone thereof. Although the reason why use of the xanthogen compound as the vulcanization accelerator increases the odor of the molded article to be obtained is not yet clarified, the present inventor presumes that this is caused by xanthogen compound-derived decomposed products generated by cross-linking or the like and left in the molded article.

It is sufficient that the pre-washed molded article is washed with hot water at 40 to 100°C. From the viewpoint of a high effect of reducing the odor and a high effect of improving the color tone, preferred is use of hot water at 50 to 95°C, more preferred is use of hot water at 65 to 90°C, and particularly preferred is use of hot water at 75 to 90°C.

The washing using the hot water is performed for a duration of preferably 1 to 120 minutes, more preferably 5 to 60 minutes, still more preferably 10 to 40 minutes, particularly preferably 15 to 30 minutes. Adjusting the washing time within the above ranges can further enhance the effect of reducing the odor and the effect of improving the color tone while appropriately suppressing a reduction in mechanical properties caused by washing.

Examples of a washing method using hot water include, but should not be limited to, a method of washing the pre-washed molded article immersed in hot water, a method of washing using a steam of hot water, and the like. Preferred is a method of washing the pre-washed molded article immersed in hot water because the effect of reducing the odor and the effect of improving the color tone can be further enhanced. The method of washing the pre-washed molded article immersed in hot water is not particularly limited as long as it is a method of imparting a constant external force (such as an external force caused by a change in water pressure or an external force caused by contact between pre-washed molded articles) to the pre-washed molded article in hot water. Examples of such a method include a method of immersing the pre-washed molded article in hot water, and washing it by generating a flow of hot water; a method of immersing the pre-washed molded article in hot water, and moving or vibrating the pre-washed molded article in hot water; a method of using a tumbler type washing tank, and swirling the pre-washed molded article in the tumbler type washing tank while the pre-washed molded article is immersed in hot water; and the like. Among these, preferred is a method of using a tumbler type washing tank, and swirling the pre-washed molded article in the tumbler type washing tank while the pre-washed molded article is immersed in hot water because the effect of reducing the odor and the effect of improving the color tone can be further enhanced.

In the method of washing the pre-washed molded article immersed in hot water, the amount of hot water used is preferably 10 to 5000 parts by weight, more preferably 30 to 1000 parts by weight, still more preferably 50 to 500 parts by weight, particularly preferably 100 to 200 parts by weight relative to 100 parts by weight of the pre-washed molded article. Adjusting the amount of hot water used within the above ranges can more appropriately enhance the effect of reducing the odor and the effect of improving the color tone.

In the washing using hot water, preferred is washing by adding a metal salt, such as iron(II) sulfate, copper(II) sulfate, zinc(II) sulfate, or manganese(II) sulfate, or a compound having micropores, such as activated carbon or zeolite, to the hot water used in the washing. More preferred is a metal salt. This can further reduce the content of carbon disulfide ($CS_2$) in the molded article, further enhancing the effect of reducing the odor. The amounts of the metal salt and the compound having micropores added to the hot water are, although not particularly limited, preferably 0.1 to 10 parts by weight, more preferably 0.2 to 5 parts by weight, still more preferably 0.5 to 2 parts by weight relative to 100 parts by weight of the pre-washed molded article. Adjusting the amount of the metal salt added within the above ranges can further enhance the effect of reducing the odor.

In dip molding, before cross-linking (vulcanization), the dip-molded layer formed by dip molding is subjected to leaching for removing water-soluble impurities (such as excess emulsifier and coagulant) in some cases. In order to remove water-soluble impurities, such leaching is usually performed before cross-linking. Thus, the leaching is totally different from the washing using hot water in the present invention which is performed after cross-linking. In addition, the leaching is a treatment to immerse the dip-molded layer in hot water for about a few tens of seconds to several minutes in order to prevent elution of the vulcanizing agent, the vulcanization accelerator, and the like needed in cross-linking. Also in this respect, the leaching is totally different from the washing using hot water performed in the present invention. In particular, the leaching is performed before cross-linking, and due to its insufficient mechanical strength, it is usually not assumed that the leaching is performed in environments in which a constant external force is imparted.

In contrast, according to the present invention, the pre-washed molded article obtained as described above is washed with hot water at 40 to 100°C. This operation and the use of the xanthogen compound can result in a molded article which can avoid delayed (Type IV) allergic reactions as well as that of immediate (Type I) allergic reactions, has a reduced odor, and has excellent color tone. In particular, in the molded article according to the present invention, among the sulfides causing the odor, the content of carbon disulfide ($CS_2$) is reduced to preferably 3 ppm by weight or less, more preferably 1 ppm by weight or less, still more preferably 0.1 ppm by weight or less, and the content of carbonyl sulfide (SCO) is reduced to preferably 2.5 ppm by weight or less, more preferably 2 ppm by weight or less, still more preferably 1 ppm by weight or less. Although the lower limit of the content of carbon disulfide ($CS_2$) and that of the content of carbonyl sulfide (SCO) in the molded article according to the present invention are not particularly limited, each lower limit is usually 0.01 ppm by weight or more.

Owing to its properties, the molded article according to the present invention obtained by the production method according to the present invention can be particularly suitably used as a glove. In the case where the molded article according to the present invention is a glove, inorganic fine particles made of talc, calcium carbonate, or the like or organic fine particles made of starch particles may be spread on the surface of the glove, an elastomer layer containing fine particles may be formed on the surface of the glove, or the surface layer of the glove may be chlorinated to prevent adhesion of contacting parts of the molded film and allow the glove to be put on and taken off more smoothly.

Further, other than the aforementioned glove, the molded article according to the present invention can also be used in medical supplies such as baby bottle nipples, droppers, tubes, water pillows, balloon stalls, catheters, condoms, and probe covers; toys such as balloons, dolls, and balls; industrial supplies such as pressure molding bags and gas storage bags; fingerstalls; and the like.

EXAMPLES

Hereinafter, the present invention will be described in more detail by way of Examples, but these Examples should not be construed as limitations to the present invention. The term "part(s)" is on a weight basis unless otherwise specified. The physical properties were measured as follows.

<Solids content>

For each sample, 2 g (weight: X2) was accurately weighed on an aluminum dish (weight: X1), followed by drying in a hot air dryer at 105°C for 2 hours. Subsequently, after cooling in a desiccator, the weight (weight: X3) of the sample and the aluminum dish was measured to calculate the solids content according to the following calculation expression:

$$\text{Solids content (wt\%)} = (X3 - X1) \times 100/X2$$

<Degree of modification of carboxy-modified synthetic polyisoprene>

The number of carboxyl groups in the carboxy-modified synthetic polyisoprene in each carboxy-modified synthetic polyisoprene latex was determined by neutralization titration of the carboxy-modified synthetic polyisoprene in the carboxy-modified synthetic polyisoprene latex using a sodium hydroxide aqueous solution. Then, the degree of modification with a monomer having a carboxyl group was determined based on the determined number of carboxyl groups according to the following formula:

$$\text{Degree of modification (wt\%)} = (X/Y) \times 100$$

In the formula, X represents the weight of units of the monomer having a carboxyl group in the carboxy-modified synthetic polyisoprene, and Y represents the weight of the carboxy-modified synthetic polyisoprene.

<Amount of sulfide gas>

Each of dip-molded articles in the form of a film was cut into a size of 5 × 5 mm to prepare a test piece. The test piece was accurately weighed, and then was placed into a head space vial (TurboMatrix 40, available from PerkinElmer Inc.). The vial was tightly sealed, and was left at room temperature for 14 days. After 14 days had passed, the gas generated inside the vial was collected with a head space sampler, and was introduced into a gas chromatograph. Thereby, the amounts of carbon disulfide ($CS_2$) and carbonyl sulfide (SCO) as sulfide gases were measured. From the obtained results of measurement and the accurately weighed weight of the test piece, the content of carbon disulfide ($CS_2$) and that of carbonyl sulfide (SCO) were calculated. The measurement by gas chromatography was performed using a gas chromatograph (GC7890, available from Agilent Technologies, Inc.) and a flame photometric detector (FPD) as a detector at a column temperature of 40°C (5 minutes)-260°C (0 minutes) and a heating rate of 11°C/min.

<Odor>

Test pieces prepared by cutting dip-molded articles in the form of a film into a size of 5 × 5 mm were used. Each test piece was placed into a 5-mL vessel, which was left at room temperature for 24 hours. The odor after the leaving was examined, and was determined according to the following criteria:

A: No odor is sensed.
B: An odor is slightly sensed.
C: An odor is clearly sensed.

<Color tone>

For dip-molded articles in the form of a film in Examples and Comparative Examples, a change in color tone was visually observed before and after washing with hot water (Examples 1 to 6) and before and after the heat treatment performed instead of the washing with hot water (Comparative Examples 2 and 3). In Comparative Example 4, any treatment instead of the washing with hot water was not performed, and thus the result was expressed as "No change".

<Example 1>

(Preparation of carboxy-modified synthetic polyisoprene (A-1) latex)

Synthetic polyisoprene (trade name "NIPOL IR2200L", available from ZEON Corporation) was mixed with n-hexane (boiling point: 69°C), and was dissolved therein by heating to 60°C with stirring to prepare an n-hexane solution (a) of synthetic polyisoprene having a synthetic polyisoprene concentration of 15 wt%.
Meanwhile, potassium rosinate was added to water, and was dissolved therein by heating to 60°C. Thus, an emulsifier aqueous solution (b) (concentration: 1.5 wt%) was prepared.
Next, the n-hexane solution (a) of synthetic polyisoprene and the emulsifier aqueous solution (b) prepared above were mixed using a mixer (product name "Multi Line mixer MS26-MMR-5.5L", available from SATAKE CHEMICAL EQUIPMENT MFG., LTD.) in such proportions that the amount of potassium rosinate in the emulsifier aqueous solution (b) was 10 parts relative to 100 parts of synthetic polyisoprene in the n-hexane solution (a) of synthetic polyisoprene. The mixture was then mixed and emulsified using an emulsifying apparatus (product name "MILDER MDN310", available from Pacific Machinery & Engineering Co., Ltd.) at a rotational speed of 4,100 rpm to give an emulsified dispersion (c). In this process, the total feed flow rate of the n-hexane solution (a) of synthetic polyisoprene and the emulsifier aqueous solution (b) was controlled at 2,000 kg/hr, the temperature was controlled at 60°C, and the back pressure (gauge pressure) was controlled at 0.5 MPa.
Subsequently, the emulsified dispersion (c) was heated to 80°C under a reduced pressure of -0.01 to -0.09 MPa (gauge pressure) to distill off n-hexane and afford an aqueous dispersion (d) of synthetic polyisoprene. In this process, a defoamer (trade name "SM5515", available from Dow Corning Toray Co., Ltd.) was continuously added by spraying the defoamer in an amount of 300 ppm by weight relative to synthetic polyisoprene in the emulsified dispersion (c). In the process of distilling off n-hexane, the emulsified dispersion (c) was adjusted to 70 vol% or less of the tank volume, and was gradually stirred at 60 rpm using a three-bladed inclined paddle as a stirring blade.
After the completion of distilling off of n-hexane, the aqueous dispersion (d) of synthetic polyisoprene was concentrated using a continuous centrifuge (product name "SRG510", available from Alfa Laval AB) at 8,000 to 9,000 G to give a synthetic polyisoprene latex (e) with a solids content of 60 wt% as a light liquid. The conditions for centrifugation were as follows: the solids content of the aqueous dispersion (d) before centrifugation was 8 wt%, the flow rate before continuous centrifugation was 1,300 kg/hr, and the back pressure (gauge pressure) of the centrifuge was 0.1 MPa.
In the next step, the latex (e) was diluted by adding 130 parts of distilled water relative to 100 parts of synthetic polyisoprene in the synthetic polyisoprene latex (e). Thereafter, a solution of 0.8 parts (relative to 100 parts of synthetic polyisoprene) of a sodium salt of a condensation product of β-naphthalene sulfonic acid and formalin (trade name "DEMOL T-45", available from Kao Corporation) as a dispersant diluted with 4 parts of distilled water relative to 100 parts of synthetic polyisoprene was added to the synthetic polyisoprene latex (e) over 5 minutes. Subsequently, the synthetic polyisoprene latex (e) containing the dispersant was fed into a nitrogen-purged reactor with a stirrer, and was warmed to 30°C with stirring. In another reactor, a diluted solution of methacrylic acid was prepared by mixing 3 parts of methacrylic acid as a carboxyl group-containing compound and 16 parts of distilled water. The diluted solution of methacrylic acid was added over 30 minutes to the reactor controlled at 20°C.

Further, a solution (f) composed of 7 parts of distilled water, 0.32 parts of sodium formaldehyde sulfoxylate (trade name "SFS", available from MITSUBISHI GAS CHEMICAL COMPANY, INC.), and 0.01 parts of ferrous sulfate (trade name "Frost Fe", available from CHELEST CORPORATION) was prepared in another reactor. After the solution (f) was transferred to the former reactor, 0.5 parts of 1,1,3,3-tetramethylbutyl hydroperoxide (trade name "PEROCTA H", available from NOF Corporation) was added thereto to allow contents to react at 20°C for 1 hour, followed by concentration in a centrifuge to yield a carboxy-modified synthetic polyisoprene (A-1) latex. The resulting carboxy-modified synthetic polyisoprene (A-1) latex was measured for degree of modification in accordance with the above method to give a degree of modification of 0.5 wt%.

(Preparation of aqueous dispersion of xanthogen compound)

2.5 Parts of zinc diisopropyl xanthate (trade name "NOCCELER ZIX", available from Ouchi Shinko Chemical Industrial Co., Ltd., volume average particle size: 14 μm, 95% volume cumulative diameter (D95): 55 μm) as a xanthogen compound, 0.45 parts (18.0 parts relative to 100 parts of zinc diisopropyl xanthate) of polyoxyethylene distyrenated phenyl ether (trade name "EMALGEN A-60", available from Kao Corporation) as a nonionic surfactant, and 2.05 parts of water were pulverized by mixing with a ball mill (trade name "porcelain ball mill", available from NITTO KAGAKU CO., Ltd.) to prepare an aqueous dispersion of a xanthogen compound. The conditions used for mixing with a ball mill were as follows: φ10 mm to φ35 mm ceramic porcelain balls (a mixture of φ10 mm, φ15 mm, φ20 mm, φ25 mm, φ30 mm, and φ35 mm ceramic porcelain balls) were used, and the mixing was performed at 50 rpm for 72 hours.

(Preparation of latex composition)

While the carboxy-modified synthetic polyisoprene (A-1) latex prepared above was being stirred, 2.5 parts (on a zinc diisopropyl xanthate basis) of the aqueous dispersion of the xanthogen compound prepared above was added relative to 100 parts of the carboxy-modified synthetic polyisoprene (A-1) in the carboxy-modified synthetic polyisoprene (A-1) latex.

On a solids content basis relative to 100 parts of the carboxy-modified synthetic polyisoprene (A-1) in the resulting mixture, 1.0 part of sulfur, 1.5 parts of zinc oxide as an activator, and 2 parts of an antioxidant (trade name "Wingstay L", available from Goodyear Tire and Rubber Company) were added to the mixture under stirring, thereby affording a latex composition. The resulting latex composition was aged (pre-vulcanized) for 48 hours in a temperature-constant water tank controlled at 25°C.

(Production of dip-molded article)

A commercially available ceramic hand mold (available from SHINKO CERAMICS CO., LTD) was washed, followed by preheating in an oven at 70°C. Thereafter, the hand mold was immersed in a coagulant aqueous solution containing 18 wt% of calcium nitrate and 0.05 wt% of polyoxyethylene lauryl ether (trade name "EMALGEN 109P", available from Kao Corporation) for 5 seconds, and then was taken out of the coagulant aqueous solution. Subsequently, the hand mold was dried in an oven at 70°C for 30 minutes or more, thereby allowing the coagulant to deposit on the hand mold, so that the hand mold was coated with the coagulant.

Thereafter, the hand mold coated with the coagulant was taken out of the oven, and was immersed for 10 seconds in the aged latex composition prepared above. Subsequently, the hand mold was air-dried at room temperature for 10 minutes, and was immersed in hot water at 60°C for 30 seconds to elute water-soluble impurities, thereby forming a dip-molded layer on the hand mold. Thereafter, the dip-molded layer formed on the hand mold was vulcanized by heating in an oven at 120°C for 20 minutes, followed by cooling to room temperature, and was separated from the hand mold after talc was spread. Thus, a glove-shaped pre-washed molded article was obtained. In the next step, the pre-washed molded article and 150 parts (relative to 100 parts of the pre-washed molded article) of deionized water adjusted to 90°C were charged into a tumbler type washing tank, and washing was performed for 30 minutes while the temperature was being kept at 90°C, thereby obtaining a dip-molded article in the form of a film which was washed and had a film thickness of about 0.2 mm. The resulting dip-molded article in the form of a film after the washing was measured for amount of sulfide gas, odor, and color tone by the aforementioned methods. The results are shown in Table 1.

The dip-molded article in the form of a film after the washing was also subjected to a patch test and measurements of tensile strength and tensile elongation on the conditions below. The results of the patch test show that all the subjects showed no delayed (Type IV) allergic reactions. The tensile strength was 25 MPa or more, and the tensile elongation was 900% or more (similar results were obtained in Examples 2 to 6 described later).

<Patch test>

The dip-molded article in the form of a film was cut into a size of 10 × 10 mm to prepare test pieces. The test pieces were applied to ten subjects. Subsequently, whether allergic symptoms of delayed (Type IV) allergic reactions appeared or not was verified by observing the applied parts of the subjects after 48 hours, and evaluation was performed according to the following criteria.

<Tensile strength and tensile elongation>

In accordance with ASTM D412, the dip-molded article in the form of a film was punched out using a dumbbell (trade name "SUPER DUMBBELL (type: SDMK-100C)", available from DUMBBELL CO., LTD.) to produce a test piece for tensile strength measurement. The test piece was stretched at a stretching speed of 500 mm/min with a Tensilon universal tester (product name "RTG-1210", available from ORIENTEC CORPORATION) to measure tensile strength immediately before break and elongation immediately before break.

<Examples 2 to 6>

Dip-molded articles in the form of a film after the washing were prepared in the same manner as in Example 1 except that the temperature of deionized water and the washing time in the washing using hot water were varied as shown in Table 1, and evaluations were performed likewise. The results are shown in Table 1. In Examples 3 and 5, the washing using hot water was performed using 100 parts of hot water blended with 1.0 part of iron(II) sulfate.

<Comparative Example 1>

A dip-molded article in the form of a film was prepared in the same manner as in Example 1 except that the washing using hot water was not performed, and evaluations were performed likewise.

<Comparative Example 2>

A dip-molded article in the form of a film was prepared in the same manner as in Example 1 except that the washing using hot water was replaced by heating in an oven at 120°C for 120 minutes, and evaluations were performed likewise.

<Comparative Example 3>

A dip-molded article in the form of a film was prepared in the same manner as in Example 1 except that the washing using hot water was replaced by heating in an oven at 80°C for 120 minutes, and evaluations were performed likewise.

<Comparative Example 4>

A dip-molded article in the form of a film after the washing was prepared in the same manner as in Example 1 except that the washing using hot water was replaced by washing using deionized water at 25°C for a washing time of 30 minutes, and evaluations were performed likewise.

[Table 1]

Table 1

| | Conjugated diene polymer | | Vulcanization accelerator | | Conditions for washing | | | | Amount of sulfide gas | | Odor | Color tone |
|---|---|---|---|---|---|---|---|---|---|---|---|---|
| | Type | Blending amount [parts] | Type | Blending amount [parts] | Washing method | Additive | Temp. [°C] | Time [min] | SCO [ppm by weight] | $CS_2$ [ppm by weight] | | |
| Example 1 | Carboxy-modified synthetic polyisoprene | 100 | Zinc diisopropyl xanthate | 2.5 | Washing with hot water | - | 90 | 30 | 0.7 | 0.4 | A | No change |
| Example 2 | Carboxy-modified synthetic polyisoprene | 100 | Zinc diisopropyl xanthate | 2.5 | Washing with hot water | - | 70 | 30 | 1.9 | 1.4 | A | No change |
| Example 3 | Carboxy-modified synthetic polyisoprene | 100 | Zinc diisopropyl xanthate | 2.5 | Washing with hot water | Iron(II) sulfate | 70 | 30 | 1.7 | 0.7 | A | No change |
| Example 4 | Carboxy-modified synthetic polyisoprene | 100 | Zinc diisopropyl xanthate | 2.5 | Washing with hot water | - | 50 | 30 | 22 | 1.8 | B | No change |
| Example 5 | Carboxy-modified synthetic polyisoprene | 100 | Zinc diisopropyl xanthate | 2.5 | Washing with hot water | Iron(II) sulfate | 50 | 30 | 2.0 | 1.1 | A | No change |
| Example 6 | Carboxy-modified synthetic polyisoprene | 100 | Zinc diisopropyl xanthate | 2.5 | Washing with hot water | - | 80 | 30 | 0.9 | 0.7 | A | No change |
| Comparative Example 1 | Carboxy-modified synthetic polyisoprene | 100 | Zinc diisopropyl xanthate | 2.5 | - | - | - | - | 2.8 | 10 | C | - |

| | Conjugated diene polymer | | Vulcanization accelerator | | Conditions for washing | | | | Amount of sulfide gas | | Odor | Color tone |
|---|---|---|---|---|---|---|---|---|---|---|---|---|
| | Type | Blending amount [parts] | Type | Blending amount [parts] | Washing method | Additive | Temp. [°C] | Time [min] | SCO [ppm by weight] | $CS_2$ [ppm by weight] | | |
| Comparative Example 2 | Carboxy-modified synthetic polyisoprene | 100 | Zinc diisopropyl xanthate | 2.5 | Heating at 120°C for 120 minutes | | | | 2.7 | 5.1 | C | Became yellow |
| Comparative Example 3 | Carboxy-modified synthetic polyisoprene | 100 | Zinc diisopropyl xanthate | 2.5 | Heating at 80°C for 120 minutes | | | | 2.8 | 9.8 | C | Became light yellow |
| Comparative Example 4 | Carboxy-modified synthetic polyisoprene | 100 | Zinc diisopropyl xanthate | 2.5 | Washing with water | - | 25 | 30 | 2.7 | 9.7 | C | No change |

Table 1 shows that when molded articles prepared from the latex composition containing the conjugated dilene polymer latex and the xanthogen compound were subjected to the step of washing with hot water at 40 to 100°C, the resulting molded articles contained reduced amounts of carbon disulfide ($CS_2$) and carbonyl sulfide (SCO) as sulfides, had a reduced odor, and had little change in color tone (Examples 1 to 6).

In contrast, when the washing with hot water at 40 to 100°C was not performed or was replaced by a heat treatment or washing with water at 25°C, the odor was increased in all the cases above. When a heat treatment was performed, the color tone was also changed (Comparative Examples 1 to 4).

## Claims

1. A method for producing a molded article, the method comprising a washing step of washing a molded article with hot water at 40 to 100°C, the molded article being prepared from a latex composition containing a conjugated diene polymer latex and a xanthogen compound.

2. The method for producing a molded article according to claim 1, further comprising a vulcanization step of vulcanizing the molded article prepared from the latex composition by heating the molded article at 80 to 150°C, wherein the washing step is a step of washing the molded article subjected to the vulcanization step with the hot water.

3. The method for producing a molded article according to claim 1 or 2, wherein the washing using the hot water is performed for a duration of 1 to 120 minutes.

4. The method for producing a molded article according to any one of claims 1 to 3, wherein the washing with the hot water is performed by swirling the molded article in a tumbler type washing tank while the molded article is immersed in the hot water.

5. The method for producing a molded article according to any one of claims 1 to 4, wherein the conjugated diene polymer latex is a synthetic polyisoprene latex, a styrene-isoprene-styrene block copolymer latex, or a deproteinized natural rubber latex.

6. The method for producing a molded article according to any one of claims 1 to 5, wherein the washing step comprises adding a metal salt to the hot water before washing the molded article, and the metal salt is added to the hot water in an amount of 0.1 to 10 parts by weight relative to 100 parts by weight of the molded article.

7. A molded article prepared by cross-linking a conjugated diene polymer using a xanthogen compound, wherein the molded article contains 3 ppm by weight or less of carbon disulfide.

## INTERNATIONAL SEARCH REPORT

| International application No. |
| --- |
| **PCT/JP2022/001405** |

**A. CLASSIFICATION OF SUBJECT MATTER**

*B29C 41/14*(2006.01)i; *B29C 41/36*(2006.01)i; *B29K 9/00*(2006.01)n; *B29L 22/00*(2006.01)n; *C08F 6/00*(2006.01)i; *C08F 8/00*(2006.01)i; *C08J 5/02*(2006.01)i
FI: B29C41/14; B29C41/36; C08F6/00; C08F8/00; C08J5/02 CEQ; B29K9:00; B29L22:00

According to International Patent Classification (IPC) or to both national classification and IPC

**B. FIELDS SEARCHED**

Minimum documentation searched (classification system followed by classification symbols)
  B29C41/14; B29C41/36; B29K9/00; B29L22/00; C08F6/00; C08F8/00; C08J5/02

Documentation searched other than minimum documentation to the extent that such documents are included in the fields searched
  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/054247 A1 (ZEON CORP.) 19 March 2020 (2020-03-19) paragraphs [0010]-[0018], [0090]-[0099], [0112]-[0113], [0140]-[0150] | 1-3, 5, 7 |
| Y | | 4 |
| X | JP 2020-164690 A (ZEON CORP.) 08 October 2020 (2020-10-08) paragraphs [0014]-[0028], [0031], [0079]-[0080] | 1-3, 5, 7 |
| Y | | 4 |
| X | WO 2021/006118 A1 (DENKA CO., LTD.) 14 January 2021 (2021-01-14) paragraphs [0016]-[0021], [0028], [0036], [0056] | 1, 3, 5, 7 |
| Y | | 4 |
| Y | WO 2019/151020 A1 (ZEON CORP.) 08 August 2019 (2019-08-08) paragraphs [0027], [0063] | 4 |
| A | JP 2002-241412 A (TAKEDA CHEM. IND., LTD.) 28 August 2002 (2002-08-28) paragraphs [0010]-[0020], [0036], [0048] | 1-7 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 February 2022** | **01 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2022/001405** |

**C.    DOCUMENTS CONSIDERED TO BE RELEVANT**

| Category* | Citation of document, with indication, where appropriate, of the relevant passages | Relevant to claim No. |
|---|---|---|
| A | JP 2017-538799 A (LG CHEM, LTD.) 28 December 2017 (2017-12-28)<br>entire text, all drawings | 1-7 |

Form PCT/ISA/210 (second sheet) (January 2015)

**INTERNATIONAL SEARCH REPORT**
Information on patent family members

International application No.

**PCT/JP2022/001405**

| Patent document cited in search report | | | Publication date (day/month/year) | Patent family member(s) | | | Publication date (day/month/year) |
|---|---|---|---|---|---|---|---|
| WO | 2020/054247 | A1 | 19 March 2020 | CN | 112654671 | A | |
| JP | 2020-164690 | A | 08 October 2020 | (Family: none) | | | |
| WO | 2021/006118 | A1 | 14 January 2021 | (Family: none) | | | |
| WO | 2019/151020 | A1 | 08 August 2019 | TW | 201934635 | A | |
| JP | 2002-241412 | A | 28 August 2002 | US paragraphs [0027]-[0096], [0126] EP CN | 2002/0111431 1215236 1358808 | A1 A2 A | |
| JP | 2017-538799 | A | 28 December 2017 | US entire text, all drawings WO EP KR CN | 2017/0226236 2016/105171 3239198 10-2016-0078288 107075039 | A1 A1 A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014129547 A

- WO 2018155243 A